# EUROPÄISCHE PATENTSCHRIFT

(11) **EP 0 702 522 B1**
(45) Veröffentlichungstag und Bekanntmachung des Hinweises auf die Patenterteilung: **19.03.1997**
(21) Anmeldenummer: 94919636.4
(22) Anmeldetag: 16.06.1994
(51) Int. Cl.: A47C 7/46

(54) **VERSTELLVORRICHTUNG FÜR EIN BIEGEELASTISCHES STÜTZELEMENT EINER RÜCKENLEHNE**
DEVICE FOR ADJUSTING A FLEXIBLE SUPPORTING ELEMENT OF A BACK-REST
DISPOSITIF DE REGLAGE D'UN ELEMENT FLEXIBLE DE SOUTIEN D'UN DOSSIER

(30) Priorität: 17.06.1993 DE 4320105
(43) Veröffentlichungstag der Anmeldung: 27.03.1996
(73) Patentinhaber: AMEU MANAGEMENT CORP., Panama 5 (PA)
(72) Erfinder: KLINGLER, Knud, D-90491 Nürnberg (DE)
(74) Vertreter: Patentanwälte Zellentin & Partner
(86) Internationale Anmeldenummer: EP9401963
(87) Internationale Veröffentlichungsnummer: WO9500053

(56) Entgegenhaltungen:
- WO-A-91/01666
- DE-A- 2 947 472
- US-A- 4 156 544

## Beschreibung

Die Erfindung betrifft eine Verstellvorrichtung für ein biegeelastisches Stützelement einer Rückenlehne zur Anpassung der Becken-und/oder Lordosenwirbelabstützung mit einer Wölbeinrichtung und mit einer Betätigungseinrichtung.

Eine derartige Verstellvorrichtung ist aus der US-A-4880271 bekannt. Hierbei besteht das Stützelement aus zwei parallelen Längsstreifen, die miteinander durch mehrere Querstreifen fest verbunden sind. Mittig zu den Längsstreifen ist am oberen Ende am obersten abschließenden Querstreifen des Stützelementes ein weiterer Blechstreifen befestigt, der nicht mit den weiteren nachfolgenden Querstreifen jedoch mit dem Nocken einer Exzentervorrichtung verbunden ist, die am unteren Ende des Stützelements angeordnet ist. Der Exzenter und damit der Nocken ist über ein Schneckengetriebe mittels einer mit einem Handgriff versehenen Betätigungseinrichtung derart verstellbar, daß der mittige Blechstreifen je nach Drehrichtung eine Wölbung bzw. eine Verflachung (Entspannung) des Stützelements bewirkt, wodurch die Einstellung der gewünschten Wölbungsstärke vornehmbar ist. Rückseitig am Stützelement ist am oberen und unteren Ende eine Feder eingehängt, die die beiden Enden des leicht vorgewölbten Stützelementes gegeneinander zieht, wodurch die Verstellung in Richtung einer stärkeren Wölbung unterstützt und somit erleichtert wird. Die Feder wirkt herbei ständig - auch wenn keine Verstellung erfolgt - auf das Stützelement ein, und ist somit von der Betätigungseinrichtung unabhängig.

Außerdem ist der gesamte Mechanismus der Wölbeinrichtung äußerst kompliziert. Ferner ist die jeweils eingestellte Wölbung steif unnachgiebig, was den Komfort beeinträchtigt.

Aufgabe der Erfindung ist es, die Vorrichtung der eingangs genannten Art dahingehend zu verbessern, daß bei einem einfachen Aufbau eine leichte Verstellung der Wölbung möglich ist und/oder daß die Spannkraft der jeweiligen Wölbungseinstellung flexibler einstellbar ist, wobei auch die Wölbung nachgiebig ist.

Diese Aufgabe wird durch eine Vorrichtung mit den Merkmalen des Anspruchs 1 gelöst.

Durch die vorzugsweise Lösung gemäß Anspruch 2 kann durch die Feder die Verstellkraft variiert werden, und es wird eine gewisse Elastizität des Stützelementes gewährleistet, d.h. es ist nicht starr und kann stärkeren Kräften ausweichen, was den Komfort erhöht.

Durch die Lösung gemäß Anspruch 3 können die Verstellkräfte zur Wölbung des Stützelementes durch die Wahl der Federstärke in beliebigem Maße - praktisch auch vollständig - kompensiert werden, so daß die Verstellung der Wölbung nahezu ohne Kraftaufwand erfolgen kann.

Durch die Lösung gemäß Anspruch 4 werden die Vorteile der Einzellösungen gemäß Anspruch 2 und Anspruch 3 miteinander kombiniert.

Weitere vorteilhafte Ausgestaltungen der Erfindung sind den weiteren Unteransprüchen zu entnehmen.

Nachstehend wird die Erfindung anhand von Ausführungsbeispielen unter Bezug auf schematische Zeichnungen näher erläutert. Es zeigt:
- Fig. 1a, b: eine Rückenlehne mit einer Bowdenzuganordnung zur Wölbungsverstellung eines Stützelementes in Draufsicht und in Seitenansicht,
- Fig. 2a, b: eine Rückenlehne mit einer Exzenteranordnung zur Wölbungsverstellung eines Stützelements in Draufsicht und in Seitenansicht,
- Fig. 3a, b: eine Rückenlehne mit Zugbändern zur Wölbungsverstellung in Draufsicht und in Seitenansicht,
- Fig. 4: eine Rückenlehne mit Bowdenzuganordnungen und Motoren zur Wölbungs- und Höhenverstellung des Stützelements in Draufsicht.

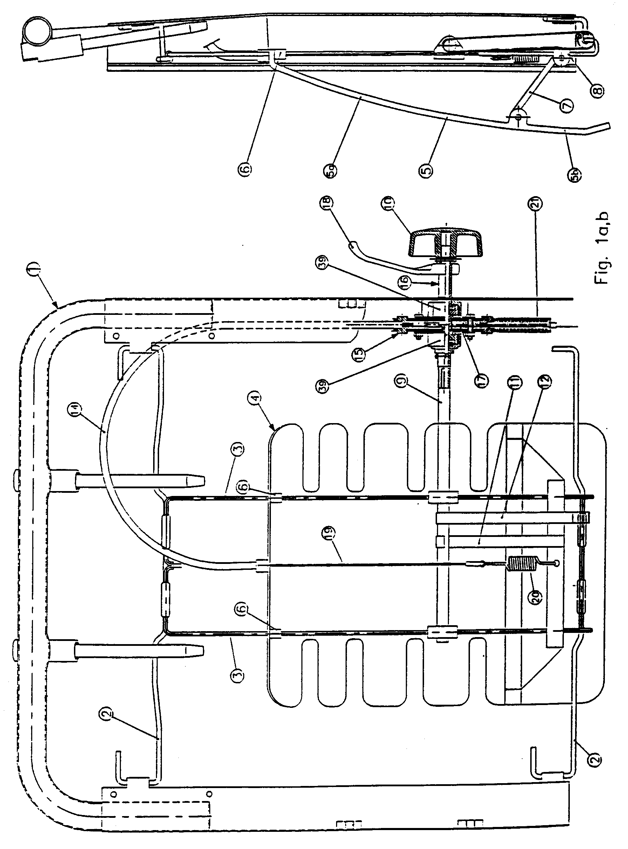

Die in Fig. 1 bis 4 dargestellte Rückenlehne weist einen Rahmen 1 auf, in dem zwischen zwei Querstreben 2 eine aus zwei parallel zueinander angeordneten Stäben 3 bestehende Führung für ein darauf auf und ab beweglich angeordnetes biegeelastisches Stützelement 4 befestigt ist.

Das Stützelement 4 im Ausführungsbeispiel gemäß Fig. 1 besteht aus einer einstückigen leicht gewölbten Platte 5, deren oberes Ende mit auf den Stäben 3 angeordneten Gleitelementen 6 verbunden ist. Die Platte 5 weist einen oberen Plattenteil 5a zur Abstützung der Lordosenwirbel, und einen unteren Teil 5b zur Abstützung des Beckens und der Beckenwirbel auf. Zwischen den Teilen 5a und 5b ist rückseitg an der Platte 5 ein Lenker 7 angelenkt, dessen freies Ende mit einer auf den Stäben 3 angeordneten Führung 8 gelenkig verbunden ist.

Die Rückenlehne weist eine Vorrichtung zur Verstellung der Wölbung sowie eine Vorrichtung zur Höhenverstellung des Stützelementes 4 auf.

Die Vorrichtung zur Höhenverstellung weist eine in den Seitenholmen des Rahmens 1 ein- oder beidseitig gelagerte Achse 9 auf, die im Falle der einseitigen Lagerung auch noch zusätzlich an einem oder beiden Stäben 3 gelagert sein kann. Die Achse 9 ist aus dem Rahmen 1 einseitig herausgeführt und an dem freien Ende mit einem Handrad 10 einer Betätigungseinrichtung verbunden. Innerhalb des Zwischenraums zwischen den Stäben 3 sind parallel zueinander und zu den Stäben 3 zwei Bänder 11, 12 angeordnet, wobei das erste Band 11 einerseits an der Achse 9 und andererseits am unteren Ende des Stützelements 4 befestigt ist. Das zweite Band 12 ist über die untere Querstrebe 2 des Rahmens 1 umgelenkt und einerseits am unteren Ende des Stützelements 4 und andererseits auf der Achse 9 befestigt. In der in Fig. 1a gezeigten Stellung ist das erste Band 11 praktisch vollständig von der Achse 9 abgewickelt, wohingegen in dieser Stellung das zweite Band 12 mit mehreren Wicklungen auf der Achse 9 aufgewickelt ist. Die Bänder 11, 12 sind derart an der Achse 9 befestigt bzw. auf sie aufgewickelt, daß bei einer Drehung der Achse 9 mittels des Handrads 10 das eine Band 11, 12 aufgewickelt und das jeweils andere Band 12, 11 abgewickelt wird, so daß sich das gesamte Stützelement 4 auf den Stäben 3 aufwärts bzw. abwärts bewegen kann.

Die Vorrichtung zur Verstellung der Wölbung des Stützelements 4 gemäß Fig. 1 weist eine Bowdenzuganordnung 13 auf. Die Außenhülse 14 der Bowdenzuganordnung 13 ist einerseits zentral am oberen Ende des Stützelementes 4 und andererseits an einer Halterung 15 einer koaxial zur Achse 9 am Rahmen 1 befestigten Betätigungseinrichtung 16 befestigt. In der Halterung 15 ist eine scheibenförmige Trommel 17 drehbar angeordnet, die mittels einer auf der Achse 9 angeordneten Hülse mit einem Hebel 18 außerhalb des Rahmens 1 gekoppelt ist. Der Seilzug 19 der Bowdenzuganordnung 13 ist einerseits am unteren Ende des Lenkers 7 mittels einer zwischengeschalteten Schraubenfeder 20 befestigt. Das andere aus der Außenhülse 14 herausgeführte Ende des Seilzugs 19 ist um die drehbare Trommel 17 geführt, wobei sein freies Ende mit einer zweiten Schraubenfeder 21 derart verbunden ist, daß das Seilzugende auf Zug belastet ist.

Vorzugsweise ist der Seilzug 19 rutschfest um die Trommel 17 geführt, wozu die Trommel wenigstens eine Ausnehmung zur Aufnahme wenigstens eines fest auf dem Seilzug 19 angeordneten Vorsprungs aufweist (nicht dargestellt). Vorzugsweise ist auch der Bewegungsweg des Seilzugs 19 zwischen einer Nullstellung und der maximal gewünschten Wölbung begrenzt, was auf beliebige Weise, z. B. durch zwei Anschläge erfolgen kann, die z. B. mit der Trommel 17 oder dem Hebel 18, deren Bewegungsweg begrenzend, zusammenwirken können (nicht dargestellt). Durch die Anschläge bzw. den begrenzten definierten Bewegungsweg wird einer Überbeanspruchung, gegebenenfalls sogar einer Zestörung, durch unkontrollierten Kraftaufwand beim Verstellen vorgebeugt.

In der Darstellung gemäß Fig. 1a ist das um die Trommel 17 geführte Ende des Seilzugs 19 durch eine an der Halterung 15 abgestützte Druckschraubenfeder 21 auf Zug beansprucht. Es ist aber genauso möglich, eine am Rahmen 1 befestigte Zugfeder vorzusehen.

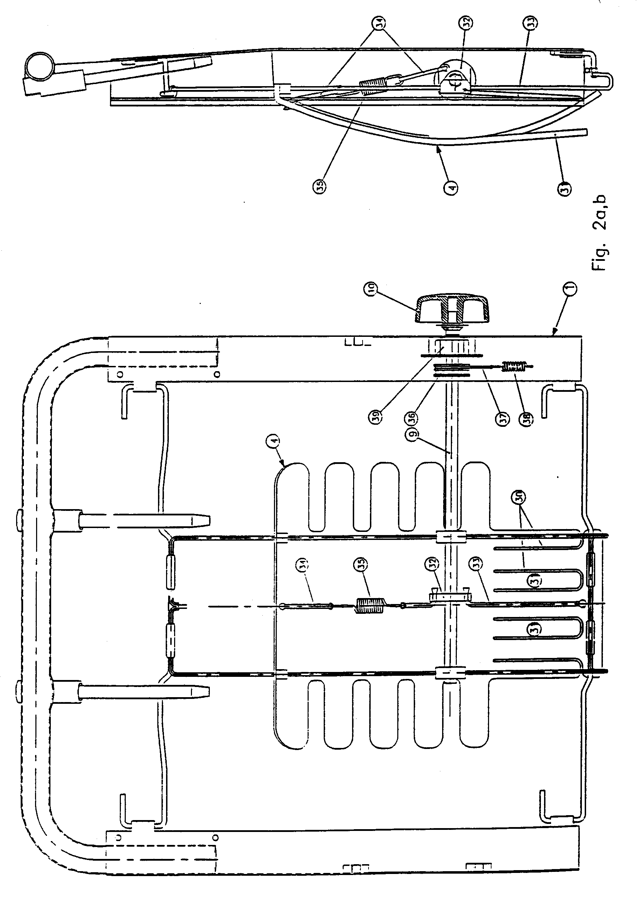

Bei dem in Fig. 2 gezeigten Ausführungsbeispiel ist lediglich eine Vorrichtung zur Verstellung der Wölbung dargestellt. Hierbei besteht das Stützelement 4 aus einer einzigen Platte mit mehreren seitlichen und im unteren Bereich ausgeführten Einschnitten 30, die im unteren Bereich Vorsprünge 31 umgrenzen. Im Falle einer Wölbung des Stützelements 4 treten diese Vorsprünge 31 aus der Flächigkeit des Stützelementes 4 heraus, wie dies aus Fig. 2b ersichtlich ist, und dienen als Abstützung der Beckenwirbel.

Bei diesem Ausführungsbeispiel ist ebenfalls eine Achse 9 vorgesehen, die im Bereich zwischen den Stäben 3 eine Scheibe 32 trägt, die mit der Achse 9 fest verbunden ist. Bei diesem Ausführungsbeispiel ist das Stützelement 4 an seinem unteren Ende an unteren Querstreben 2 angelenkt. Am unteren Rand sowie am oberen Rand des Stützelements 4 ist jeweils eine Zugstange 33 bzw. 34 eingehängt, die an sich diametral gegenüberliegenden Stellen am Rande der Scheibe 32 eingehängt sind. In eine der Zugstangen 33 oder 34, hier in die obere Zugstange 34, ist eine Feder 35 zwischengeschaltet.

Im Bereich des Rahmens 1 ist auf der Achse 9 eine zweite Scheibe 36 angeordnet, auf der auf- bzw. abwickelbar ein Ende eines Seiles 37 befestigt ist, dessen freies Ende unter Einschaltung einer Zugfeder 38 am Rahmen 1 befestigt ist.

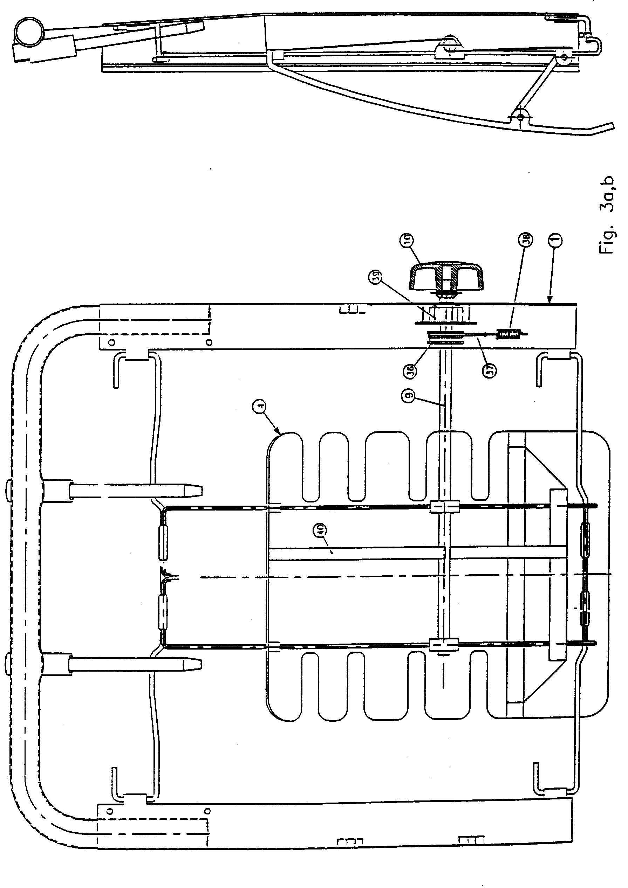

Bei dem in Fig. 3 dargestellten Ausführungsbeispiel weist das Stützelement 4 die bei der Beschreibung von Fig. 1 dargelegte Ausführungsform auf. Auch in Fig. 3 ist nur eine Vorrichtung zur Verstellung der Wölbung dargestellt. Das Ausführungsbeispiel gemäß Fig. 3 weist die gleiche Ausführung gemäß dem in Fig. 2 beschriebenen Ausführungsbeispiel mit dem Unterschied auf, daß statt einer Exzenteranordnung mit der Scheibe 32 und den Zugstangen 33, 34 hier das obere und untere Ende des Stützelements 4 durch ein Band 40 miteinander verbunden sind, das frei beweglich durch die Achse 9 hindurchführt oder auch mit dieser verbunden sein kann.

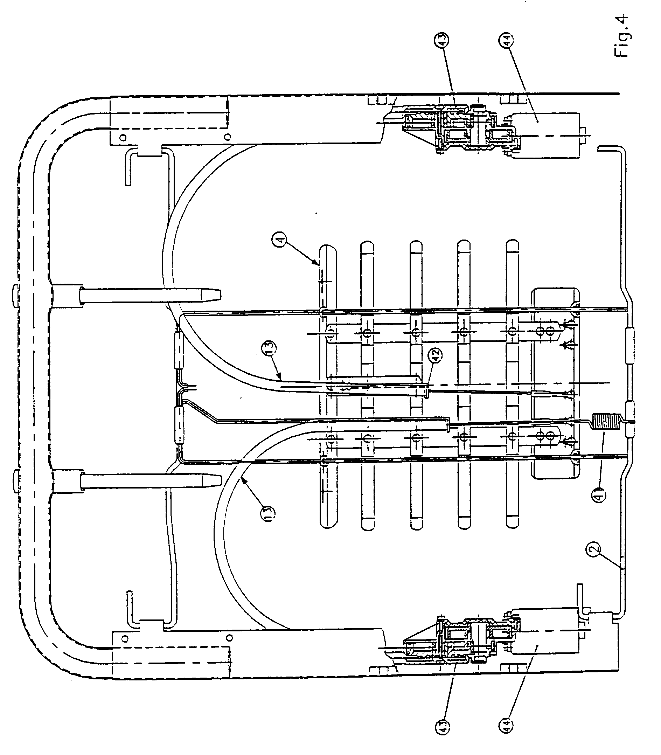

Bei dem in Fig. 4 dargestellten Ausführungsbeispiel - bei dem die erfindungsgemäßen Federn wegen einer klareren Darstellung weggelassen sind - dient sowohl zur Höhen- als auch zur Wölbungsverstellung des Stützelementes 4 jeweils eine Bowdenzuganordnung 13, wobei zwischen dem unteren Ende des hier aus einem Metallgitter bestehenden Stützelements 4 und der unteren Querstrebe 2 eine Rückholfeder 41 angeordnet ist, die das Stützelement 4 gegen die untere Querstrebe 2 zieht. Die Vorrichtung zur Wölbungsverstellung weist den in Fig. 1 beschriebenen Aufbau mit dem Unterschied auf, daß die Außenhülse 14 der Bowdenzuganordnung 13 nicht am oberen Ende des Stützelementes 4 sondern am freien Ende einer dort befestigten Verlängerung 42 festgelegt ist und daß statt einer Handverstellung ein Getriebe 43 mit einem Elektromotor 44 vorgesehen ist. Zur Höhenverstellung ist ebenfalls ein Getriebe 43 mit Elektromotor 44 vorgesehen.
Vorzugsweise sind mindestens alle Vorrichtungen mit Handverstellung jeweils mit einer bekannten Freilaufbremse 39 (Fig. 1 bis 3) versehen, die eine Selbstverstellung der Wölbungs- und/oder Höhenverstellung verhindert, jedoch andererseits eine gewollte Verstellung mittels des Handrads 10 bzw. des Hebels 18 nicht behindert. Vorzugsweise besteht das Stützelement 4 gemäß den Fig. 1 bis 3 aus einem Kunststoff, was den Vorteil der einfachen und billigen Herstellung bei geringem Gewicht bedingt, auch wenn gegebenenfalls Verstärkungen, wie Rippen oder Verdickungen vorgesehen sind, da diese im Gießverfahren bzw. durch Verformen in Formen leicht herstellbar sind. Vorzugsweise sind die Stützelemente 4 gemäß Fig. 1 und 3 aus zwei Teilen, dem eigentlichen Stützelement 4 und dem Lenker 7 so hergestellt, daß sie ohne Werkzeug z. B. durch Einschieben von Achsvorsprüngen in - eine bestimmte Drehung ermöglichende - Lager zusammengefügt werden können. Im Falle der Stützelemente 4 gemäß Fig. 2 können diese auch aus einer Kunststoffplatte ausgestanzt werden.

Die verschiedenen Ausgestaltungen, wie sie bei den Fig. 1 bis 4 beschrieben sind, können auch in beliebigen geeigneten Kombinationen eingesetzt werden.

Die Vorrichtung zur Wölbungsverstellung gemäß Fig. 1 arbeitet wie folgt:
Durch Lösung des Hebels 18 aus seiner Raststellung, wobei die Rastvorrichtung eine beliebige bekannte sein kann, zum Beispiel auch eine Freilaufbremse 39, wird die Trommel 17 durch eine Verschwenkbewegung des Hebels 18 um die Achse 9 gedreht, wobei diese entsprechend der Drehrichtung den Seilzug 19 der Bowdenzuganordnung 13 auf- oder abwickelt. Durch die Zugkraft der Feder 21 wird die Drehbewegung zur Wölbung des Stützelementes 4 unterstützt, so daß dadurch die zur Wölbung aufzuwendende Kraft verringert und diese erleichtert wird. Bei einer Verstellung im Sinne einer Verringerung der Wölbungsstärke entspannt sich das biegeelastische Stützelement 4 und wirkt so der Spannkraft der Feder 21 entgegen, so daß auch dann eine leichte Verstellung gegeben ist. Durch die zwischen das Ende des Seilzugs 19 und dem Einhängpunkt im unteren Bereich des Stützelements 4 bzw. Lenkers 7 zwischengeschaltete Feder 20 ist die jeweils eingestellte Wölbung nicht mehr wie bei dem bekannten Lösungen starr, sondern durch die Feder 20 kann das Stützelement 4 einem größeren Druck federnd nachgeben und die gesamte Lehne wird dadurch in ihrer Charakteristik weicher und bequemer. Läßt der erhöhte Druck, nach zieht sich die Feder 20 wieder zusammen und die vorher eingestellte Wölbung ist wieder gegeben.

Die in Fig. 2 dargestellte Vorrichtung zur Verstellung der Wölbung arbeitet ähnlich wie die in Fig. 1 beschriebene, wobei hier eine Drehbewegung der Achse 9 durch das Handrad 10, nachdem dieses aus seiner Raststellung gelöst ist, eine Bewegung der benachbarten Enden der Zugstangen 33 bzw. 34 in der Scheibe 32 höhenmäßig relativ aufeinander zu bzw. voneinander weg bewirkt, wodurch die Wölbung bzw. Entspannung des Stützelements 4 erfolgt. Bei diesem Ausführungsbeispiel ist die Feder 38, die mit dem Seil 37 und der zweiten Scheibe 36 gekoppelt ist, so eingesetzt, daß sie die zur Wölbung des Stützelements 4 auf das Handrad 10 auszuübende Kraft unterstützt, d.h. daß der Kraftaufwand zur Verstellung der Wölbung ebenfalls verringert wird.

Das in Fig. 3 dargestellte Ausführungsbeispiel arbeitet analog dem in Fig. 2 dargestellten, wobei sich bei einer Drehung der Achse 9 hier das Band 40 zur Erzielung der Wölbung auf die Achse 9 aufwickelt, wobei ebenfalls durch die auch hier vorhandene Feder 38 dieser Kraftaufwand durch ihre Federwirkung vermindert wird.

Durch die Unterstützung bzw. Kompensation der sich einer Wölbungsverstellung widersetzenden Kräfte durch die Federn 21 bzw. 38 wird der Kraftaufwand zur Verstellung der Wölbung deutlich verringert, so daß auch Elektromotoren 44 mit geringer Leistung und damit auch geringen Abmesssungen und geringem Geräuschpegel problemlos einsetzbar sind, so daß die Verstellungen auch mit motorischen Getrieben vorgenommen werden können. In Fig. 4 sind sowohl zur Höhen- als auch Wölbungsverstellung Elektromotore 44 mit Übersetzungsgetrieben 43 vorgesehen. Die Funktion dieser Ausführungen ist entsprechend der zu Fig. 1 beschriebenen mit dem Unterschied, daß statt der Drehbewegung mittels des Handrads 10 bzw. des Hebels 18, diese durch die elektrischen Reversiermotore 44 erfolgt.

Bei allen Ausführungsformen ist es vorteilhaft, die jeweiligen Bewegungen z. B. durch Anschläge zu begrenzen, um eine letztlich zur Beschädigung oder gar Zerstörung führende Überspannung des Stützelements 4 zu vermeiden.

## Patentansprüche

1. Verstellvorrichtung für ein biegeelastisches Stützelement (4) einer Rückenlehne zur Anpassung der Becken- und/oder Lordosenwirbelabstützung mit einer Wölbeinrichtung und mit einer Betätigungseinrichtung,
dadurch gekennzeichnet,
daß mindestens eine Feder (20, 35; 21, 38) im Kraftübertragungsweg zur Verstellung der Wölbung angeordnet ist.

2. Vorrichtung nach Anspruch 1,
dadurch gekennzeichnet, daß
die Feder (20, 35) zwischen einem Teil des Stützelements (4) und dem Kraftübertragungsteil der Wölbeinrichtung angeordnet ist.

3. Vorrichtung nach Anspruch 1
dadurch gekennzeichnet, daß
die Feder (21, 38) am freien Ende des Kraftübertragungsteils der Wölbeinrichtung hinter der Betätigungseinrichtung angeordnet ist.

4. Vorrichtung nach Anspruch 1,
dadurch gekennzeichnet, daß
eine erste Feder (20, 35) zwischen einem Teil des Stützelements (4) und dem Kraftübertragungsteil der Wölbeinrichtung und eine zweite Feder (21, 38) am freien Ende des Kraftübertragungsteils der Wölbeinrichtung hinter der Betätigungseinrichtung angeordnet ist.

5. Vorrichtung nach einem der Ansprüche 2 bis 4,
dadurch gekennzeichnet, daß
der die Feder (20) enthaltende Kraftübertragungsteil der Seilzug (19) einer Bowdenzuganordnung (13) ist.

6. Vorrichtung nach einem der Ansprüche 2 bis 4,
dadurch gekennzeichnet, daß
der die Feder (35) enthaltende Kraftübertragungsteil eine Zugstange (34) einer Exzenteranordnung ist.

7. Vorrichtung nach Anspruch 5,
dadurch gekennzeichnet, daß
der Seilzug (19) um eine mit der Betätigungseinrichtung gekoppelte scheibenförmige Trommel (17) geschlungen ist und beidseitig je eine Feder (20, 21) aufweist.

8. Vorrichtung nach einem der Ansprüche 1 bis 7,
dadurch gekennzeichnet, daß
der Verstellweg der Kraftübertragung zwischen zwei mit der Betätigungseinrichtung zusammenwirkenden Anschlägen begrenzt ist.

9. Vorrichtung nach einem der Ansprüche 1 bis 8,
dadurch gekennzeichnet, daß
die Betätigungseinrichtung eine Freilaufbremse (39) aufweist.

10. Vorrichtung nach einem der Ansprüche 1 bis 9,
dadurch gekennzeichnet, daß
das Stützelement (4) aus Kunststoff besteht.

11. Vorrichtung nach einem der Ansprüche 1 bis 10,
dadurch gekennzeichnet, daß
die Betätigungseinrichtung einen Stellmotor (44) aufweist.

## Claims

1. Adjusting device for a flexible supporting element (4) of a back-rest for adaptation of the lumbar and/or lordotic spine support with a curving arrangement and with an actuating arrangement, characterised in that at least one spring (20, 35; 21, 38) is located in the force transmission path for adjusting the curvature.

2. Device according to Claim 1, characterised in that the spring (20, 35) is located between a part of the supporting element (4) and the force transmission part of the curving arrangement.

3. Device according to Claim 1, characterised in that the spring (21, 38) is located at the free end of the force transmission part of the curving arrangement behind the actuating arrangement.

4. Device according to Claim 1, characterised in that a first spring (20, 35) is located between a part of the supporting element (4) and the force transmission part of the curving arrangement and a second spring (21, 38) is located at the free end of the force transmission part of the curving arrangement behind the actuating arrangement.

5. Device according to one of Claims 2 to 4, characterised in that the force transmission part containing the spring (20) is the cable line (19) of a Bowden cable arrangement (13).

6. Device according to one of Claims 2 to 4, characterised in that the force transmission part containing the spring (35) is a tie-rod (34) of an eccentric arrangement.

7. Device according to Claim 5, characterised in that the cable line (19) is wound around a disc-like drum (17) connected to the actuating arrangement and comprises a spring (20, 21) respectively on both sides.

8. Device according to one of Claims 1 to 7, characterised in that the adjusting path of the force transmission is defined between two stops cooperating with the actuating arrangement.

9. Device according to one of Claims 1 to 8, characterised in that the actuating arrangement comprises a freewheeling brake (39).

10. Device according to one of Claims 1 to 9, characterised in that the supporting element (4) consists of synthetic material.

11. Device according to one of Claims 1 to 10, characterised in that the actuating arrangement comprises a servo motor (44).

## Revendications

1. Dispositif de réglage d'un élément flexible (4) de soutien d'un dossier pour adaptater l'appui des vertèbres sacrées et des lombaires, avec un dispositif de courbure et un dispositif de manoeuvre, caractérisé en ce qu'au moins un ressort (20, 35; 21, 38) est disposé dans le chemin de transmission des efforts, pour le réglage de la courbure.

2. Dispositif suivant la revendication 1, caractérisé en ce que le ressort (20, 35) est disposé entre une partie de l'élément de soutien (4) et la partie de transmission des efforts du dispositif de courbure.

3. Dispositif suivant la revendication 1, caractérisé en ce que le ressort (21, 38) est disposé à l'extrémité libre de la partie de transmission des efforts du dispositif de courbure, derrière le dispositif de manoeuvre.

4. Dispositif suivant la revendication 1, caractérisé en ce qu'un premier ressort (20, 35) est disposé entre une partie de l'élément de soutien (4) et la partie de transmission des efforts du dispositif de courbure, et en ce qu'un second ressort (21, 38) est disposé à l'extrémité libre de la partie de transmission des efforts du dispositif de courbure, derrière le dispositif de manoeuvre.

5. Dispositif suivant l'une quelconque des revendications 2 à 4, caractérisé en ce que la partie de transmission des efforts contenant le ressort (20) est le câble de traction (19) d'un système à câble Bowden (13).

6. Dispositif suivant l'une quelconque des revendications 2 à 4, caractérisé en ce que la partie de transmission des efforts contenant le ressort (35) est une tige de traction (34) montre excentriquement.

7. Dispositif suivant la revendication 5, caractérisé en ce que le câble de traction (19) est enroulé autour d'un tambour (17) en forme de disque, couplé au dispositif de manoeuvre et présentait un ressort (20, 21) sur chacun des deux côtés.

8. Dispositif suivant l'une quelconque des revendications 1 à 7, caractérisé en ce que le chemin de réglage de la transmission des efforts est limité entre deux butées, qui coopèrent avec le dispositif de manoeuvre.

9. Dispositif suivant l'une quelconque des revendications 1 à 8, caractérisé en ce que le dispositif de manoeuvre comporte un frein à roue libre (39).

10. Dispositif suivant l'une quelconque des revendications 1 à 9, caractérisé en ce que l'élément de soutien (4) est constitué en matière plastique.

11. Dispositif suivant l'une quelconque des revendications 1 à 10, caractérisé en ce que le dispositif de manoeuvre comporte un servomoteur (44).
